# FASCICULE DE BREVET EUROPEEN

(11) **EP 2 812 148 B1**
(45) Date de publication et mention de la délivrance du brevet: **02.11.2016**
(21) Numéro de dépôt: 13704194.3
(22) Date de dépôt: 23.01.2013
(51) Int. Cl.: B23K 26/26, B29C 65/16, B29D 24/00, B32B 3/12

(54) **PROCÉDÉ ET INSTALLATION DE FABRICATION D'UNE STRUCTURE ALVÉOLAIRE EN NID D'ABEILLES**
VERFAHREN UND ANLAGE ZUR HERSTELLUNG EINER WABENZELLSTRUKTUR
METHOD AND INSTALLATION FOR THE MANUFACTURE OF A HONEYCOMB CELLULAR STRUCTURE

(30) Priorité: 06.02.2012 FR 1251053
(43) Date de publication de la demande: 17.12.2014
(73) Titulaire: Plasticell, 63100 Clermont-Ferrand (FR)
(72) Inventeur: LE MONNIER, Marc, F-63000 Clermont-ferrand (FR)
(86) Numéro de dépôt international: PCT/FR2013/050141
(87) Numéro de publication internationale: WO 2013/117838

(56) Documents cités:
- FR-A1- 2 929 549

## Description

L'invention concerne un procédé de fabrication d'une structure alvéolaire de type nid d'abeilles en matière plastique.

Le procédé industriel le plus efficace et qui représente aujourd'hui plus de 95% de la production mondiale de structures en nid d'abeilles toutes matières confondues est le « stagger-bonding » (autrement dit le « liage en quinconce »). Il consiste à constituer un bloc parallélépipédique compact en empilant horizontalement une à une des feuilles d'un matériau donné (papiers aramides, métal, caoutchouc, carton, etc...), chaque feuille étant liée à celle qui la précède et donc au bloc tout entier par un ensemble de lignes parallèles régulièrement espacées. Les lignes de liage sont déplacées d'une feuille à l'autre de manière à venir s'intercaler au milieu des espacements des lignes précédemment réalisées. Cette alternance, ainsi que la largeur des lignes et leur espacement provoquent la formation de cellules hexagonales lorsqu'un effort d'étirage est exercé entre les deux extrémités du bloc perpendiculairement au plan des feuilles. De fait selon la matière utilisée, on choisit d'expanser le bloc entier ou de le découper en tranches et d'expanser ensuite chaque tranche séparément.

Le liage des feuilles est réalisé dans la presque totalité des cas, pour les feuillards métalliques comme pour les papiers aramides, au moyen d'un adhésif du type époxy-nylon. Sa résistance au pelage et au cisaillement est très élevée. Une fois réticulé, l'adhésif peut supporter une température maximale de 204°C, alors qu'un mince feuillard d'alliage d'aluminium 5052 ne résiste plus correctement à un effort de compression au delà de 177°C. Les alternatives à la colle sont le brasage et le soudage autogène.

Le nid d'abeilles en carton nécessite également une colle pour assembler les feuilles entre elles. Cependant, il n'est pas possible de recycler de telles structures en nid d'abeilles, étant donné que cela nécessiterait de séparer les feuilles en carton de la colle, ce qui est impossible.

Les structures en nid d'abeilles utilisant de la colle présentent donc l'inconvénient de ne pas être écologiques.

Le document WO94/06580 A1 décrit un procédé de fabrication du type « stagger-bonding » d'une structure nid d'abeilles en feuillard métallique par soudage laser. L'énergie du rayon laser est concentrée dans un spot de petit diamètre qui parcourt la distance à souder en une seule fois, et la mise en pression des feuilles à souder ensemble s'exerce de part et d'autre du cordon de soudure.

Le procédé de fabrication décrit dans dans WO 94/06580 A1 ne pourrait pas s'appliquer à des feuilles de polymères thermoplastiques qui conduisent mal la chaleur et nécessitent par conséquent que l'énergie du laser soit apportée graduellement et de manière uniforme sur toute la largeur du cordon de soudure. Or, lorsqu'elles sont fines, ces feuilles peuvent former de petits plis et il est donc essentiel pour un bon contact que la mise en pression se fasse au niveau du cordon de soudure et non à côté. De plus, les moyens mis en oeuvre lors de l'étirage pour la fabrication d'une structure en nid d'abeilles en aluminium qui consistent notamment en des picots métalliques ne sont pas adaptés pour étirer des feuilles de polymères thermoplastiques.

Le document WO98/06577 A1 décrit un procédé de fabrication d'un bloc de feuilles compact expansable en une structure en nid d'abeilles. Les feuilles contiennent au moins une phase thermoplastique présentant une température de ramollissement et une température de fusion nettement plus élevée. Avant la pose de chaque nouvelle feuille, on applique à la surface du bloc un ensemble de cordons parallèles d'une matière donnée. Cette matière peut être par exemple un polymère thermoplastique similaire à celui que contient la feuille. Si les cordons de matière thermoplastiques sont appliqués chauds par extrusion, il suffit de presser à froid la feuille libre sur le bloc. S'ils sont appliqués froids, un pressage à chaud permet leur adhésion à la surface du bloc et de la feuille libre. Le pressage à chaud peut avoir lieu après la dépose de chaque nouvelle feuille, où uniquement après la constitution du bloc, ce qui veut dire que tous les cordons sont ramollis simultanément. Le bloc est ensuite expansé puis, éventuellement, imprégné d'une résine thermodurcissable qui sera réticulée dans un four. Cependant, la mise en oeuvre du procédé décrit dans le document WO98/065577 A1 présente une réelle complexité du fait que les thermoplastiques sont de mauvais conducteurs de la chaleur et qu'il semble alors difficile de réussir à souder de manière parfaitement répétable et avec une solidité suffisante des centaines de feuilles entre elles en pressant à chaud ou à froid des milliers de cordons pour obtenir un unique bloc.

Ainsi, les méthodes de liage de feuilles pour fabriquer une structure en nid d'abeilles dépendent de la nature du matériau des feuilles employé. Comme cela a été détaillé ci-dessus, ces méthodes nécessitent non seulement des étapes complexes ne rendant pas leur industrialisation intéressante, mais aussi elles ne donnent pas toujours des résultats très satisfaisants quant à la qualité obtenue de la structure en nid d'abeilles, à savoir l'homogénéité des cellules.

De plus, ces méthodes de liage peuvent requérir des ajouts de matières qui présentent des inconvénients tels que fragiliser la structure en nid d'abeilles ou bien empêcher le recyclage de la structure en nid d'abeilles.

Aussi, les moyens d'étirage pour des feuilles en matière thermoplastique sont souvent complexes et difficiles à mettre en oeuvre d'un point de vue industriel par rapport à ceux utilisés pour l'étirage de feuilles en aluminium, et ce du fait des propriétés mécaniques différentes de ces matériaux qui doivent impérativement être prises en compte lors de l'étirage. En d'autres termes, à la différence de l'étirage de feuilles en aluminium, on se heurte en plus à des difficultés techniques lorsqu'on souhaite étirer des feuilles en matériau thermoplastique pour obtenir une structure en nid d'abeilles en matière thermoplastique selon la technique du « stagger-bonding ».

FR 2 929 549 A1 décrit un procédé et une installation de fabrication d'une structure alvéolaire en nid d'abeilles formée de plusieurs feuilles d'un matériau thermoplastique assemblées les unes aux autres, procédé dans lequel on réalise des zones pourvues de reliefs dans chaque feuille, et on assemble chaque feuille libre à une feuille adjacente d'un bloc intermédiaire formé par les différentes feuilles assemblées entre elles au préalable, en soudant au moins certaines des zones planes en contact de cette feuille libre et de cette feuille adjacente avec une source laser selon une ligne continue parallèle à l'axe des reliefs. Ce procédé ne correspond pas à la technique du « stagger-bonding » puisque le bloc n'est pas compact mais constitué d'alvéoles ouvertes. Il n'y a donc pas d'étirage à réaliser. Le principal désavantage en comparaison avec le nid d'abeilles compact est le coût logistique puisque le volume stocké et transporté est essentiellement constitué d'air.

La présente invention propose de remédier à l'ensemble de ces inconvénients auxquels on est confronté lorsqu'on souhaite fabriquer une structure en nid d'abeilles, et en particulier une structure en matière thermoplastique, selon la technique du « stagger-bonding ».

La présente invention concerne un procédé de fabrication d'une structure en nid d'abeilles selon la technique du « stagger-bonding » à partir de feuilles de n'importe quel matériau thermoplastique, étanche ou poreux, qui offre la possibilité de choisir librement la dimension des cellules hexagonales et qui permet la découpe en tranches sans perte de matière, de manière à optimiser les coûts de stockage et de transport. L'invention concerne aussi une installation mettant en oeuvre ledit procédé de fabrication d'une structure en nid d'abeilles.

Plus précisément, le procédé de fabrication d'une structure en nid d'abeilles selon l'invention comprend les étapes suivantes :
- on dispose d'une première feuille d'un matériau thermoplastique contenant au moins un agent d'expansion ;
- on rapporte et on soude au laser, selon une pluralité de cordons de soudure continus espacés les uns des autres, une deuxième feuille d'un matériau thermoplastique absorbant sur la première feuille, le cas échéant on rapporte et on soude au laser, selon une pluralité de cordons de soudure continus espacés les uns des autres, au moins une deuxième feuille sur la deuxième feuille qui la précède de manière à former un empilement de deuxièmes feuilles ;
- on rapporte et on soude au laser, selon une pluralité de cordons de soudure continus espacés les uns des autres, sur la deuxième feuille, le cas échéant sur l'empilement de deuxièmes feuilles, une troisième feuille d'un matériau thermoplastique contenant au moins un agent d'expansion ;
- on forme des premières boucles entre les cordons de soudure de la première feuille avec la deuxième feuille, le cas échéant avec l'empilement de deuxièmes feuilles, par expansion du matériau thermoplastique de la première feuille ;
- on forme des deuxièmes boucles entre les cordons de soudure de la troisième feuille avec la deuxième feuille, le cas échéant avec l'empilement de deuxièmes feuilles, par expansion du matériau thermoplastique de la troisième feuille ;
- on dispose dans les premières boucles et deuxièmes boucles un dispositif d'étirage ;
- on étire l'ensemble constitué par la première feuille, la deuxième feuille, le cas échéant l'empilement de deuxièmes feuilles, et la troisième feuille au moyen du dispositif d'étirage.

Dans le cadre de la présente invention, on entend par :
- « matériau thermoplastique absorbant », un matériau thermoplastique qui absorbe dans l'infrarouge proche à savoir à une longueur d'onde comprise entre 750 et 1400 nm, de préférence entre 800 et 1100 nm ;
- « agent d'expansion », un agent permettant l'accroissement du volume du matériau thermoplastique de 12 à 20 fois lorsque ledit matériau est soumis à un traitement activant l'agent d'expansion.
   L'agent d'expansion est avantageusement un agent d'expansion chimique qui peut être activé par la chaleur. De manière préférée, il s'agit de l'azodicarbonamide, éventuellement mélangé à des activateurs qui abaissent sa température de décomposition. Les activateurs peuvent être des composés du zinc tels que l'oxyde de zinc (ZnO), un stéarate de zinc ou bien le benzène-sulfohydrazide ou une alpha-amidosulfone.

La structure en nid d'abeilles obtenue selon le procédé de fabrication de l'invention est parfaitement recyclable, car elle est exempte de colles.

En outre, bien qu'exempte de points de colle, la structure en nid d'abeilles n'en demeure pas moins solide et homogène, car en soudant feuille à feuille et en disposant la surface de chaque feuille dans un plan horizontal, on construit un empilement parallélépipédique compact. Cet empilement offre une résistance élevée à la compression, ce qui permet d'appliquer lors du soudage au laser une forte pression sur la feuille libre au niveau du cordon de soudure et ainsi de garantir des soudures aussi solides que le matériau constitutif.

De plus, la structure en nid d'abeilles peut être stockée et transportée sous sa forme compacte, c'est-à-dire sous la forme d'un bloc constitué des feuilles planes soudées entre elles, où sous la forme de tranches découpées dans ce bloc.

Selon des aspects avantageux mais non obligatoires de l'invention, le procédé peut incorporer une ou plusieurs des caractéristiques suivantes, prises seules ou en combinaison entre elles :
Afin d'obtenir une structure en nid d'abeilles avec des cellules parfaitement identiques entre elles et de forme hexagonale, il est préconisé de réaliser le soudage au laser selon des cordons de soudure continus, régulièrement espacés et parallèles entre eux.

L'agent d'expansion est de manière préférée l'azodicarbonamide. On peut alors former des premières boucles et des deuxièmes boucles en chauffant respectivement la première feuille et la troisième feuille à la température de décomposition de l'agent d'expansion qui est de préférence de l'azodicarbonamide. Cette température peut être abaissée en ajoutant à l'azodicarbonamide un activateur de décomposition.

De manière avantageuse, le matériau thermoplastique de la première feuille et de la troisième feuille comprend au moins un polymère tel qu'une polyoléfine, de préférence choisi dans le groupe constitué par le polypropylène, le polyéthylène et l'éthylène vinyle acétate (EVA).

De plus, selon des modes de réalisation avantageux de l'invention, le matériau thermoplastique de la deuxième feuille comprend au moins un polymère choisi dans le groupe constitué par le polypropylène, le polyéthylène, les polyamides, les polyesters, les polystyrènes, le polycarbonate, l'acrylonitrile butadiène styrène, le polyétherimide, les polyéthersulfones, le polysulfure de phénylène et le polyéther éther cétone et contient en outre du noir de carbone.

De manière préférée, on soude au laser au moyen d'un dispositif de soudage qui comprend une pluralité de têtes laser générant chacune un faisceau laser de forme rectangulaire qui est uniforme ou à profil énergétique en forme de "M".

Selon un mode de réalisation de l'invention, le dispositif d'étirage comprend une pluralité d'étriers et une pluralité de tiges en U. Les tiges en U sont agencées de manière à pénétrer dans les premières boucles et deuxièmes boucles et à les relier aux étriers.

Le dispositif d'étirage peut comprendre un moyen de diffusion d'air chaud.

La structure alvéolaire en nid d'abeilles obtenue selon le procédé de fabrication de l'invention peut présenter une densité inférieure à 50 kg/m³, de préférence inférieure à 30 kg/m³, avec des alvéoles hexagonales de maille comprise entre 3 et 50 mm.

Avec le procédé de fabrication selon l'invention, on peut découper la structure alvéolaire en nid d'abeilles, par exemple avec un massicot, en des tranches dont l'épaisseur est d'au moins 1 mm, de préférence entre 1 et 5 mm, et dont la tolérance d'épaisseur est inférieure à +/- 0,2 mm.

Ces caractéristiques techniques sont tout à fait avantageuses pour les applications auxquelles on destine les structures en nid d'abeille ainsi obtenues, et tout particulièrement pour la fabrication de panneaux sandwich avec des moules par thermocompression.

L'invention a aussi pour objet une installation pour la mise en oeuvre du procédé de fabrication d'une structure en nid d'abeilles tel que décrit ci-dessus, ladite installation comprend :
- des moyens de découpe des premières feuilles, deuxièmes feuilles et troisièmes feuilles ;
- un dispositif d'empilement des premières feuilles, deuxièmes feuilles et troisièmes feuilles ;
- un dispositif de soudage au laser, optionnellement équipé de moyens de pression ;
- un dispositif d'expansion de l'agent d'expansion du matériau thermoplastique de la première feuille et de la troisième feuille ;
- un dispositif d'étirage, optionnellement équipé d'un moyen de diffusion d'air chaud.

De manière avantageuse, le dispositif d'étirage comprend une pluralité d'étriers, une pluralité de tiges en U, lesdites tiges en U étant agencées de manière à pénétrer dans les premières boucles et les deuxièmes boucles et à les relier aux étriers.

Selon des modes de réalisation de l'installation, elle peut en outre comporter les caractéristiques suivantes prises seules ou en combinaison entre elles :
- le dispositif d'expansion comprend un four à air chaud, par exemple sous la forme d'une enceinte équipée de résistances chauffantes qui diffusent un air chaud dans l'enceinte.
- le dispositif de soudage comprend une pluralité de têtes laser générant chacune un faisceau laser de forme rectangulaire qui est uniforme ou à profil énergétique en "M".

L'invention sera mieux comprise et d'autres avantages de celle-ci apparaîtront plus clairement à la lecture de la description qui va suivre d'un procédé de fabrication d'une structure en nids d'abeilles conforme à l'invention et d'une installation de mise en oeuvre de ce procédé, donnée uniquement à titre d'exemple et en se référant aux dessins annexés dans lesquels :
- la figure 1 est une vue de face schématique en coupe longitudinale d'une partie d'une installation de fabrication d'une structure en nid d'abeilles selon l'invention.
- la figure 2 est une vue de dessus de l'installation représentée à la figure 1.
- les figures 3a à 3f représentent des exemples de réalisation de cellules hexagonales de différentes dimensions.
- la figure 4a est une vue schématique de côté d'une tête de soudage laser et de ses roues presseuses.
- la figure 4b est une vue schématique de face en coupe partielle de la tête de soudage de la figure 4a.
- la figure 5 représente une vue schématique d'un dispositif d'expansion qui peut être utilisé dans le cadre de l'invention.
- la figure 6 représente une vue schématique d'une tranche d'une structure en nid d'abeilles obtenue selon le procédé de fabrication de l'invention.
- la figure 7 est une coupe transversale schématique d'une partie d'un dispositif d'étirage qui peut être utilisé dans le cadre de l'invention.
- la figure 8 est une coupe transversale schématique du dispositif d'étirage intégrant un dispositif de chauffage de la tranche de nid d'abeilles compacte.
- la figure 9 est une vue schématique d'une partie d'un dispositif d'étirage selon un deuxième mode de réalisation.
- la figure 10 est une vue schématique de dessus d'une partie du dispositif d'étirage représenté à la figure 9.

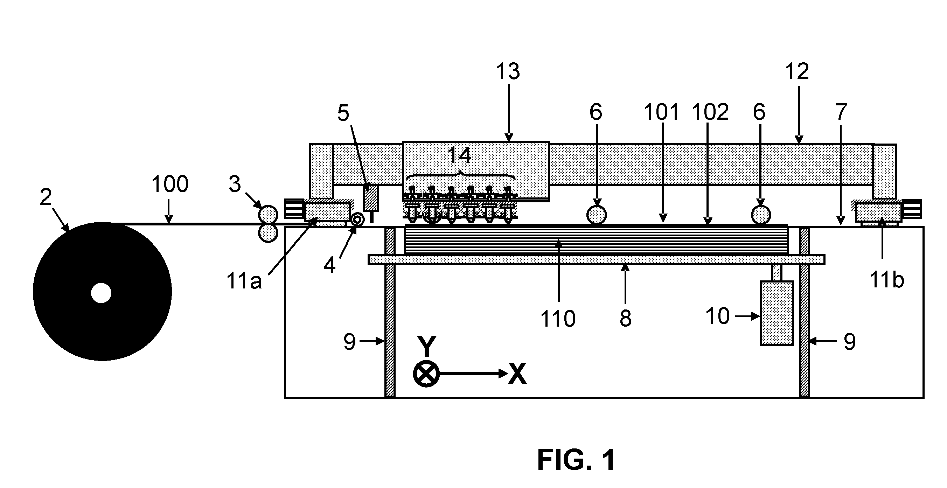

Sur la figure 1 est représentée une bande 100 d'un matériau thermoplastique absorbant qui est déroulé à partir d'une bobine 2. Cette bande 100 a avantageusement une épaisseur comprise entre 0,1 et 1 mm.

Le matériau thermoplastique de la bande 100 peut être choisi dans le groupe constitué par les polyoléfines (polypropylène, polyéthylène), les polyamides, les polyesters, les polystyrènes, le polycarbonate, l'acrylonitrile butadiène styrène, le polyétherimide, les polyéthersulfones, le polysulfure de phénylène et le polyéther éther cétone.

De manière avantageuse, ledit matériau est renforcé par des fibres telles que par exemple et de manière non exhaustive les fibres de verre, de carbone ou les fibres aramides, de manière à accroître les performances thermomécaniques de la structure en nid d'abeilles. Cela procure l'avantage d'obtenir des structures en nid d'abeilles selon le procédé de fabrication de l'invention exhibant des propriétés phydiques particulièrement avantageuses pour les applications techniques auxquelles elles sont destinées.

Selon des modes de réalisation de l'invention, ce matériau thermoplastique peut en outre être étanche ou au contraire poreux à l'air, ou avoir été perforé avec de fines aiguilles par une machine. Des tels matériaux perforés sont particulièrement appropriés et recherchés dans les domaines techniques tels que ceux de l'aéronautique et du spatial. Ainsi, la structure en nid d'abeilles obtenue selon le procédé de fabrication selon l'invention est particulièrement adéquate et avantageuse pour ces domaines techniques.

La plupart des polymères thermoplastiques n'absorbent pas ou très peu le rayonnement électromagnétique dans l'intervalle de longueur d'onde 750 à 1400 nm. Pour les rendre absorbants, il suffit d'ajouter une charge qui entre en vibration à la longueur d'onde du laser lorsque le polymère est éclairé par une source laser. La vibration extrêmement rapide des molécules de charge provoque par frottement au sein du matériau thermoplastique une élévation de température.

La charge absorbante la plus utilisée est le noir de carbone, car elle peut être utilisée dans une large bande spectrale qui couvre le visible et tout l'infrarouge proche. Cependant, le noir de carbone peut présenter l'inconvénient d'opacifier et de colorer le matériau thermoplastique en noir. Les alternatives au noir de carbone sont l'Iriodin® de MERCK, le Clearweld® de GENTEX Corp. et les Lumogen® de BASF qui ne colorent que très faiblement le matériau thermoplastique qui conserve ainsi sa transparence dans le spectre visible.

Selon un mode de réalisation de l'invention, le matériau thermoplastique absorbant de la bande 100 est sous la forme d'un bicouches, à savoir qu'il est constitué d'une couche supérieure transparente dans l'infrarouge proche et d'une couche inférieure absorbante dans l'infrarouge proche de plus faible épaisseur que la couche supérieure.

Lorsque le matériau thermoplastique est bicouches, on soude au laser par transparence. Plus précisément, lorsque le rayon laser traverse la couche transparente, son énergie électromagnétique est convertie en chaleur dans la couche absorbante. Cette couche absorbante devient pâteuse et, par conduction thermique, provoque également le ramollissement de la surface de l'autre deuxième feuille bicouches sur laquelle elle s'appuie. En exerçant une pression localement importante sur les zones pâteuses en contact, on provoque une interpénétration de matière entre deux feuilles à souder. Après refroidissement, on obtient une soudure de bonne qualité.

Idéalement la couche absorbante doit être très fine, de manière à générer la chaleur au plus près de l'interface entre les deux feuilles que l'on soude. Il est obligatoire d'absorber presque totalement le rayonnement électromagnétique dans la couche absorbante de la première feuille. D'une part pour obtenir le meilleur rendement énergétique, et d'autre part pour empêcher que suffisamment d'énergie électromagnétique atteigne la couche absorbante de la feuille suivante, ce qui aurait pour conséquence fâcheuse de souder trois feuilles ensemble.

Cela impose cependant une proportion de charge, telle que le noir de carbone, d'autant plus grande que la couche absorbante est fine, et ce au détriment de la résistance mécanique. Cependant, en dessous de 10 microns d'épaisseur, la couche absorbante risque de se déchirer lors de l'étape d'étirage du procédé de fabrication selon l'invention.

C'est pourquoi, dans le cas de l'emploi de noir de carbone, il est prudent de choisir l'épaisseur de la couche absorbante autour de 20 microns. Pour que l'absorption du rayonnement laser soit supérieure à 95%, la proportion de noir de carbone en masse dans la couche absorbante doit alors être de 5% minimum. Outre la quantité, la finesse des particules et surtout l'uniformité de la dispersion du noir de carbone dans la couche absorbante sont importantes.

Selon un autre mode de réalisation de l'invention, le matériau thermoplastique absorbant de la bande 100 est sous la forme d'un tricouches.

Des feuilles bicouches et tricouches de polypropylène (PP), de polyéthylène (PE), de polystyrène (PS), et de polyéthylène téréphtalate amorphe (APET) d'épaisseurs d'au moins 150 microns sont couramment fabriquées de manière industrielle. Il est possible de réaliser par coextrusion une feuille bicouches à partir de polymères thermoplastique tels que ceux précités avec une épaisseur d'au moins 150 microns. Cela est parfaitement approprié à la gamme de densités d'un nid d'abeilles en maille 8 mm que l'on peut obtenir avec le procédé de fabrication selon la présente invention.

Par contre, les machines de coextrusion permettent rarement de produire de manière maîtrisée une couche de 20 microns. C'est pourquoi, dans le cadre de la présente invention, on peut utiliser un bicouches constitué d'une couche supérieure d'une épaisseur de l'ordre de 150 microns d'un polymère tel que choisi parmi le PP, le PE, le PS ou l'APET et d'une couche inférieure d'une épaisseur de l'ordre de 40 microns d'un polymère tel que choisi parmi le PP, le PE, le PS ou l'APET qui comprend en outre un taux de charge telle que du noir de carbone de l'ordre de 2,5% en poids.

Dans un autre mode de réalisation de l'invention, le matériau thermoplastique absorbant de la bande 100 est un monocouche en un matériau thermoplastique qui peut être 100% recyclé et qui contient du noir de carbone. Il peut en outre contenir des fibres de renfort. Selon ce mode de réalisation, on soude par conduction, à savoir qu'au cours du déplacement du segment laser, la température va s'élever progressivement jusqu'à dépasser le point de fusion du matériau thermoplastique. Cette élévation progressive de la température se communique à la feuille du dessous, et il suffit d'appliquer rapidement une forte pression sur la ligne de soudure puis de laisser refroidir.

Selon la température de ramollissement du matériau thermoplastique, le procédé selon ce mode de réalisation est très bien adapté pour souder des feuilles jusqu'à 300 microns d'épaisseur.

A titre d'exemple, une feuille de polyester (APET) monocouche de 200 microns contenant 1% de noir de carbone peut être soudée sur une autre même feuille de polyester (APET) monocouche qui est elle-même déjà soudée sur l'empilement de deuxièmes feuilles, et ce à une vitesse comprise entre 110 et 150 mm par seconde, avec un segment laser de 120 W répartis sur une surface de 150 mm de long et 3 mm de large, sans que la soudure ne se propage plus en dessous de cette feuille supérieure de l'empilement de deuxièmes feuilles. Un film de PEEK de 150 microns est soudé dans les mêmes conditions à une vitesse comprise entre 90 et 100 mm par seconde.

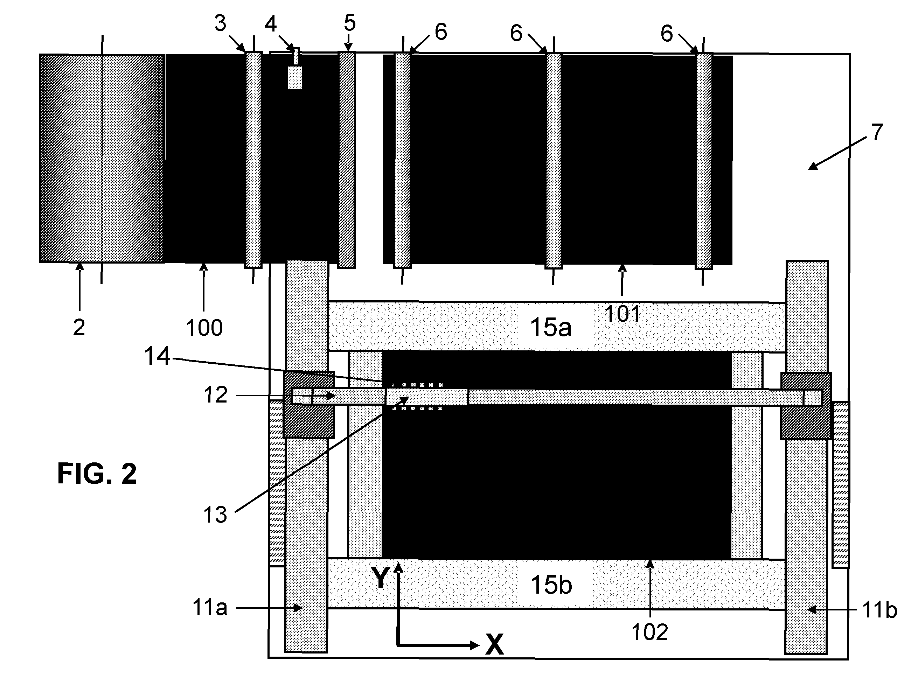

Tel que représenté aux figures 1 et 2, la bobine 2 déroule une bande 100 d'un bicouches constitué d'une couche supérieure d'une épaisseur de 150 microns de PP et d'une couche inférieure d'une épaisseur de 40 microns PP qui comprend en outre un taux de noir de carbone de 2,5% en poids.

Tel que représenté aux figures 1 et 2, la bande 100 est déroulée en position horizontale par un moteur agissant directement sur le mandrin de la bobine 2 et par un jeu de cylindres caoutchoutés 3.

Un massicot 5 (il peut aussi s'agir d'un fil chaud) découpe, sous le contrôle d'une roue de mesure de défilement 4, la bande 100 en des deuxièmes feuilles 101 qui une fois disposées et soudées entre elles vont constituer un empilement 110 de deuxièmes feuilles 101. Selon les dimensions souhaitées de la structure en nid d'abeilles, la longueur de la deuxième feuille 101 peut être ajustée.

Selon un autre mode de réalisation de l'invention non représenté, il peut être prévu un dispositif fournissant selon un ordre prédéterminé des deuxièmes feuilles 101 de matériaux thermoplastiques absorbants de mêmes dimensions mais par exemples de natures et/ou de couleurs différentes ou bien avec des micro-perforations localisées.

La deuxième feuille 101 découpée par le massicot 5 est ensuite transférée au moyen de cylindres caoutchoutés 6 à un emplacement déterminé d'une table horizontale 7 pour être ensuite transférée à l'aide d'un dispositif de transfert à la portée de l'homme du métier sur la pile de deuxièmes feuilles 101 en formation. Un système de butées escamotables permet de superposer parfaitement la deuxième feuille 101 sur l'empilement 110 de deuxièmes feuilles 101.

L'empilement 110 est supporté par un plateau 8 qui peut se déplacer verticalement en étant guidé par des colonnes 9 et sous l'action du vérin électrique 10. Ainsi, le plateau 8 dont la surface supérieure est en début de fabrication de la structure en nid d'abeilles dans le même plan que la table 7 descend au fur et à mesure de l'accroissement de l'empilement 110 de deuxièmes feuilles 101. De manière avantageuse, il peut être prévu que lorsque la surface de l'empilement 110 dépasse celle de la table 7 d'une valeur limite, un capteur déclenche la mise en route du vérin électrique 10 et de ce fait la descente du plateau 8 d'une valeur déterminée.

Il est à noter que préalablement à l'empilement de deuxièmes feuilles 101, avait été disposée sur le revêtement antidérapant (non représenté) du plateau 8 une première feuille 38 d'un matériau thermoplastique qui contient au moins un agent d'expansion.

Le revêtement antidérapant est avantageusement de couleur blanche coloré avec de l'oxyde de titane qui n'absorbe pas le rayonnement laser dans l'infrarouge proche mais qui le diffuse dans son volume sans le laisser sortir.

Le matériau thermoplastique de la première feuille 38 peut être une polyoléfine telle que choisie dans le groupe constitué par le polypropylène, le polyéthylène et l'éthyl vinyl acétate. Le matériau thermoplastique de la première feuille 38 doit être compatible avec le matériau de la deuxième feuille 101 pour que ces feuilles puissent être soudées entre elles.

Le taux d'agent d'expansion est avantageusement compris entre 5 et 15%, de préférence entre 7 et 11%, en poids du matériau thermoplastique dont est constituée la première feuille 38.

L'agent d'expansion est avantageusement un agent d'expansion chimique, de préférence l'azodicarbonamide.

Dans un mode de réalisation de l'invention, la première feuille 38 a été obtenue par extrusion d'un matériau thermoplastique. De plus, lors de l'extrusion un agent d'expansion, de préférence un agent d'expansion chimique, a été mélangé sous la forme solide au matériau thermoplastique. A titre d'exemple, si l'on souhaite fabriquer des structures en nid d'abeilles en polypropylène, on ajoute de l'azodicarbonamide (de manière préférée qui est mélangé à des activateurs qui le décompose à 160°C) comme agent d'expansion chimique à des granulés de polyéthylène pour obtenir une feuille compacte de 300 microns à 1 mm. La feuille a ensuite été réticulée, de manière à former un réseau tridimensionnel insoluble et infusible. De manière avantageuse, le taux de réticulation est supérieur à 50%. Il s'agit du taux de gel insoluble. Par « taux de gel insoluble », on entend le taux de gel insoluble lors d'une extraction par le solvant xylène à chaud.

Dans un mode de réalisation de l'invention, le matériau de la première feuille 38 peut être aussi absorbant dans l'infrarouge proche, par exemple s'il contient en outre une charge telle que du noir de carbone.

Le matériau de la première feuille 38 peut être indifféremment absorbant dans l'infra-rouge proche ou transparent puisque c'est la deuxième feuille 101 posée sur la première feuille 38 qui convertit l'énergie du laser en chaleur.

Dans un mode de réalisation de l'invention où la deuxième feuille 101 n'est pas soudable au laser avec la première feuille 38, on peut contrecoller (par exemple avec une colle polyuréthanne bicomposant) un film noir absorbant (à savoir qu'il contient par exemple du noir de carbone) de même nature que le matériau de la première feuille 38 sur une feuille transparente constituée du matériau thermoplastique de la deuxième feuille 101. Un format de ce complexe sera utilisé en intercalaire entre la première feuille 38 et l'empilement 110 de deuxièmes feuilles 101, sa face noire étant mise en contact avec la première feuille.

Lorsque le nombre requis de deuxièmes feuilles 101 a été assemblé par soudage au laser pour constituer un empilement 110, une troisième feuille 380 d'un matériau thermoplastique contenant au moins un agent d'expansion est disposée et soudée sur l'empilement 110 de deuxièmes feuilles 101. En d'autres termes, elle est soudée avec la dernière deuxième feuille 101 de l'empilement 110.

De manière tout à fait avantageuse, le matériau thermoplastique de la troisième feuille 380 n'est pas absorbant pour éviter que de la chaleur ne soit générée à sa surface sous l'effet de l'éclairement laser lors du soudage. Aussi, cela procure l'avantage de pouvoir souder par transparence, ce qui est plus rapide qu'un soudage par conduction.

Dans un mode de réalisation de l'invention où la troisième feuille 380 n'est pas soudable au laser à la dernière deuxième feuille 101, l'intercalaire utilisé entre la dernière deuxième feuille 101 de l'empilement 110 et la troisième feuille 380 est un complexe composé d'un mince film noir du matériau thermoplastique constitutif des deuxièmes feuilles 101 et d'un mince film noir du matériau constitutif de la troisième feuille 380. Ainsi, on peut souder au travers de la troisième feuille 380 sur la dernière deuxième feuille 101 de l'empilement 110 grâce à la chaleur dégagée par les deux films noirs contrecollés.

Sur les figures 1 et 2, l'axe de l'abscisse X est parallèle à la longueur de la deuxième feuille 101 et l'axe de l'ordonnée Y est parallèle à la largeur de la deuxième feuille 101.

Un ensemble de moteurs linéaires, constitués de deux moteurs identiques 11 a et 11 b effectuent des mouvements parfaitement synchronisés et déplacent selon l'axe Y un troisième moteur linéaire 12. Les moteurs linéaires sont des servomoteurs synchrones sans balais. Ils fonctionnent sur le même principe que les moteurs rotatifs mais sont ouverts et déroulés à plat. L'interaction électromagnétique entre un assemblage de bobines (ensemble primaire) et une voie d'aimants permanents (ensemble secondaire) transforme l'énergie électrique en une énergie mécanique linéaire avec une grande efficacité. L'ensemble primaire mobile est le chariot 13. Ces moteurs sont particulièrement avantageux pour l'invention, car la précision de positionnement du chariot 13 est de l'ordre de 10 microns. Cela veut dire que le chariot 13 déplace selon l'axe X un ensemble de têtes de soudage laser 14 en garantissant que les cordons de soudure seront, sur une même deuxième feuille 101 ou une troisième feuille 380, distants de la valeur souhaitée avec une tolérance de +/- 10 microns, mais aussi que les cordons de soudure seront alignés dans toute l'épaisseur de l'empilement 110 avec la même précision de +/- 10 microns. C'est une caractéristique technique importante pour la formation, lors de l'étirage, de cellules hexagonales régulières et parfaitement alignées.

En effet, avantageusement, le soudage au laser est réalisé au moyen d'un dispositif de soudage qui comprend une pluralité de têtes de soudage laser 14 parallèles. Pour la clarté de la figure 1, seules 6 têtes de soudage laser ont été représentées, dont les dimensions ont été exagérées de manière à les rendre visibles. Dans la réalité le chariot 13 peut déplacer par exemple jusqu'à 31 têtes de soudage laser sur une course utile de 1680 mm. Cette longueur est préférée, car elle correspond à une largeur standard des machines de découpe.

De plus, le dispositif de soudage peut en outre comporter au moins une roue presseuse.

Préférentiellement, chaque tête de soudage laser 14 génère un segment de lumière uniforme. On définit de la manière suivante un éclairement uniforme d'une surface supérieure à 10 millimètres carrés : Soit une surface élémentaire de 1 millimètre carré. L'éclairement est dit uniforme sur la surface supérieure à 10 millimètres carrés si l'écart entre la puissance optique moyenne reçue par cette surface supérieure à 10 millimètres carrés et la puissance reçue par n'importe laquelle de ses surfaces élémentaires n'excède pas 10 %.

Lors de la fabrication d'une structure en nid d'abeilles compacte, la difficulté consiste à réaliser des cordons de soudure rectilignes aussi résistants à la rupture que la feuille elle-même qui, par nature, est souple, tout en préservant la planéité de la feuille que l'on vient de souder. Si des déformations apparaissent à la surface de l'empilement 110, les têtes de soudage laser 14 peuvent ne pas porter à plat sur la deuxième feuille 101 à souder, ce qui est préjudiciable à la qualité des cordons de soudure. D'autre part ces déformations peuvent s'accumuler dans l'épaisseur de l'empilement 110. La non planéité des feuilles à souder et la faiblesse de certaines des soudures qui les lient peuvent rendre impossible l'étirage à chaud d'une tranche de ce bloc.

C'est pourquoi, dans le cadre de la présente invention, il est avantageux de générer un faisceau laser uniforme de forme rectangulaire à la surface de la feuille que l'on soude. En effet, à puissance égale, on soude plus vite avec un seul passage d'un segment laser qu'avec un spot circulaire en balayage, car l'élévation de température est continue dans le premier cas et en dents de scie dans le deuxième cas.

A titre indicatif, le faisceau laser de forme rectangulaire ("le segment laser") peut avoir avantageusement une longueur comprise entre 8 cm et 15 cm (plus précisément de l'ordre de 8 cm, lorsqu'on soude par transparence et de l'ordre de 15 cm lorsqu'on soude par conduction) et une largeur de 3 mm.

Bien entendu, si nécessaire, l'homme du métier pourrait tout à fait décider de s'écarter de ces valeurs de longueur de faisceau laser précisées à titre indicatif, l'essentiel étant de produire un faisceau uniforme très allongé.

De plus, lorsqu'on soude par transparence, il est aussi avantageux d'utiliser un segment laser uniforme transmis par un guide de lumière en matière plastique. L'une des conditions essentielles à un soudage de qualité est ainsi garantie : la mise en contact des deux feuilles à souder au moment de l'irradiation. La largeur du cordon de soudure est alors égale à la largeur du guide de lumière. Aussi, le guide de lumière peut, selon sa nature, refroidir la surface de la feuille supérieure à souder et éviter ainsi une dégradation de l'état de surface. Ce qui est très important lorsque l'on veut souder ensemble plusieurs centaines de feuilles pour constituer un empilement.

La matière utilisée pour usiner le guide est de préférence un polymère thermoplastique amorphe naturellement très transparent dans l'infrarouge proche. Un guide de lumière en polycarbonate donne d'excellents résultats, mais si la température à la surface de la feuille à souder dépasse 120°C, il faut utiliser un polymère à plus haute résistance en température tel que le polyétherimide (jusqu'à 180°C) ou même un polyimide thermoplastique tel que l'Extem® de SABIC qui supporte 250°C.

Le polycarbonate et le polyétherimide ont un faible coefficient de conductivité thermique, de l'ordre de 0,2 W/m.K à 20°C. Ils ne peuvent donc pas drainer la chaleur qui remonte de l'interface entre les deuxièmes feuilles à souder jusqu'à la surface de la feuille supérieure à souder.

De plus, compte tenu de la pression exercée par le guide de lumière sur la feuille au niveau des zones ramollies, il est possible que le guide de lumière laisse une marque en creux. Le marquage est d'autant plus prononcé que la couche transparente est fine et la quantité d'énergie pour provoquer le ramollissement de la couche absorbante est élevée. Il est possible d'éviter le marquage de la surface de la feuille au point d'obtenir une soudure presque invisible de l'extérieur. Pour ce faire, il faut maintenir la température de la surface de la feuille à souder à une valeur très inférieure à sa température de déformation. On réalise un drainage calorique très efficace en remplaçant le guide de lumière en matière thermoplastique amorphe par une matière minérale également très transparente mais conductrice de la chaleur. Cela peut être par exemple un saphir synthétique dont le coefficient de conductivité thermique est de 40 W/m.K à 20°C (200 fois plus que le polycarbonate). Le cordon de soudure obtenu est aussi résistant en traction que la feuille elle-même, et la surface de la feuille est parfaitement plane et lisse. Le drainage calorique absorbe une partie de la chaleur créée dans la couche absorbante par le segment laser et de ce fait il impose à puissance égale de souder moins rapidement qu'avec un guide de lumière en matière plastique.

Le choix entre polycarbonate ou polyétherimide d'un côté ou saphir synthétique de l'autre est à la portée de l'homme du métier.

Un compromis entre ces deux alternatives consiste à utiliser du verre optique dont le coefficient de conduction thermique est de 1,1 W/m.K à 20°C, ou du quartz (1,4 W/m.K à 20°C).

Dans un autre mode de réalisation de l'invention, l'éclairement est uniforme selon l'axe Y, et présente selon l'axe X un profil parabolique avec un axe de symétrie parallèle à l'axe Y. La valeur d'éclairement est maximum aux extrémités du petit côté du segment et décline progressivement pour atteindre au centre du segment une valeur inférieure d'environ 15% au maximum. Un tel profil énergétique est dit "en forme de M".

Avantageusement le segment de lumière laser est généré par des matrices de diodes VCSEL (« Vertical Cavity Surface Emitting Laser » traduit par « laser à cavité verticale émettant par la surface ») qui émettent dans l'infrarouge proche, à savoir à une longueur d'onde comprise entre environ 750 et 1400 nm, et préférablement entre 800 et 1100 nm.

Tout aussi avantageusement, le segment de lumière laser peut être généré par une diode ou plusieurs diodes émettant par la tranche ("edge emitter") qui émettent dans l'infrarouge proche, à savoir à une longueur d'onde comprise entre environ 750 et 1400 nm, et préférablement entre 800 et 1100 nm. Au moins une lentille réfractive peut être utilisée pour donner au faisceau laser un profil énergétique uniforme ou en forme de"M" tel que décrit ci-dessus.

Lorsque le soudage est effectué par conduction, les têtes de soudage laser sont dépourvues de guide de lumière et projettent directement un faisceau à la surface de la feuille à souder.

Il est à noter que la technique du soudage laser et le dispositif de soudager laser qui peut être utilisé dans le cadre de la présente invention sont parfaitement à la portée de l'homme du métier. A titre d'exemple, la demande internationale WO 2011/117504 A1 décrit des modes de réalisation de soudage laser et des dispositifs de soudage laser qui sont appropriés pour la mise en oeuvre du procédé de fabrication selon la présente invention.

La figure 2 permet de mieux comprendre comment des lignes de soudure sont générées pour souder entre elles deux deuxièmes feuilles 101. Le chariot 13 commence le cycle d'assemblage d'une deuxième feuille 101 dite « libre » puisque pas encore soudée sur l'empilement 110 de deuxièmes feuilles 101, en partant d'une extrémité de la course du moteur linéaire 12.

L'ensemble du processus de fabrication de l'empilement 110 est avantageusement piloté par un ordinateur. Les données suivantes doivent être intégrées :
- l'épaisseur de la deuxième feuille 101,
- la maille de la cellule hexagonale régulière,
- la largeur et la longueur de la plaque de nid d'abeilles après expansion.

Un logiciel calcule alors le nombre de deuxièmes feuilles 101 nécessaires à assembler, la longueur de découpe de ces deuxièmes feuilles 101, l'écartement entre les têtes de soudage laser 14 (qui est réalisé de manière préférée manuellement), la position de départ du chariot 13 et le parcours de l'ensemble de têtes de soudage laser 14.

Lorsque le cycle est lancé, les moteurs 11 a et 11 b réalisent un premier ensemble de cordons de soudure parallèles en transportant les têtes de soudage laser 14 en fonctionnement sur toute la largeur de la deuxième feuille 101 (à savoir selon l'axe Y) jusqu'à sortir complètement à l'extérieur de cette deuxième feuille 101, dans une zone 15a où l'alimentation électrique des sources laser est coupée. Cette zone 15a, comme la zone 15b qui lui est symétrique, comporte un plan incliné qui part de la surface du bloc pour rejoindre une zone plane située plus bas que la position basse des têtes de soudage laser 14 et des roues. Les têtes de soudage laser 14 et les roues presseuses du chariot 13 qui sont entièrement contenues dans la zone 15a ne sont pas en appui mais simplement maintenues "suspendues dans l'air" par le chariot 13. Le programme informatique commande alors au chariot 13 de se rendre à son point d'abscisse suivante, et l'ensemble des têtes de soudage laser 14 est déplacé selon l'axe X sans frottement. L'alimentation des sources laser est rétablie. Les moteurs 11a et 11 b déplacent alors le moteur 12 et l'ensemble des têtes de soudage laser 14 de nouveau selon l'axe Y, dans le sens opposé au déplacement précédent pour la réalisation d'une nouvelle série de cordons de soudure parallèles. Dans la zone 15b les têtes de soudage laser 14 ne sont plus alimentées et elles peuvent se déplacer selon l'axe X, de même que les roues presseuses du chariot, et ce sans frottement. Le chariot 13 rejoint une nouvelle abscisse X et le cycle précédent recommence jusqu'à ce que le chariot atteigne sa dernière abscisse. Le programme le renvoie à sa nouvelle position de départ avec une vitesse des moteurs linéaires qui peut atteindre 3 mètres par seconde, ce qui veut dire que le retour est très rapide. Simultanément, si le capteur d'épaisseur du bloc donne un signal, le vérin électrique 10 fait descendre le plateau 8 d'une valeur préétablie. Une deuxième feuille 101 est placée sur l'empilement 110 et le cycle de fabrication reprend tel que détaillé ci-dessus. La nouvelle position de départ est telle que les nouveaux cordons de soudure se trouveront exactement au milieu des cordons précédemment réalisés. En d'autres termes, les têtes de soudage laser 14 se décalent selon l'axe X de manière à ce que les segments laser passent au milieu des cordons de soudure réalisés sur la deuxième feuille 101 précédente.

Avantageusement, le soudage selon des lignes parallèles et régulièrement espacées du format sur le bloc est effectué en au moins deux passages de l'ensemble des têtes de soudage laser 14. Cela permet de limiter le nombre de ces têtes de soudage laser 14 et de maintenir suffisamment d'espace sur l'axe X pour pouvoir modifier l'écartement entre les lignes de soudure et ainsi la dimension des cellules hexagonales.

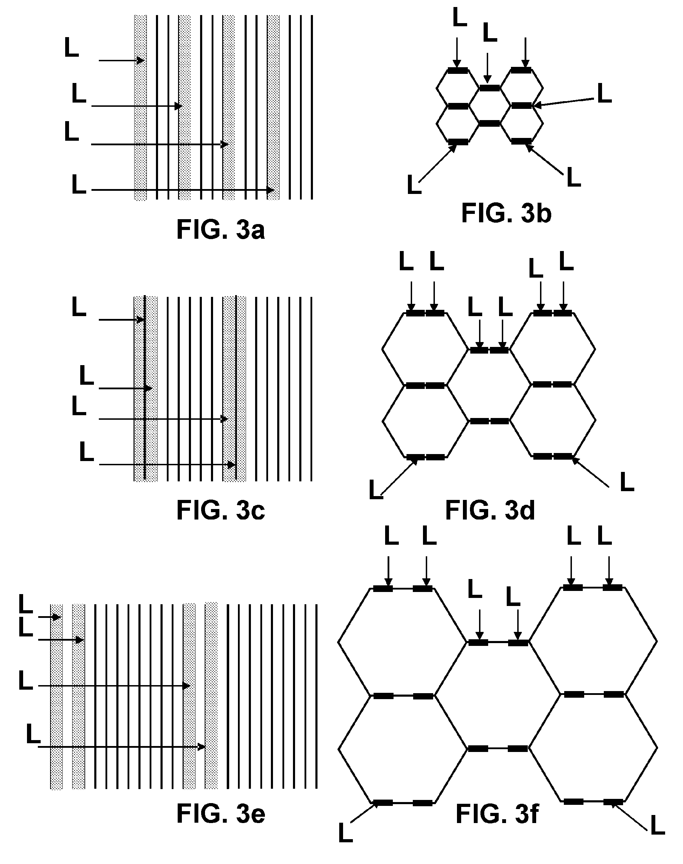

Les figures 3a à 3f illustrent quelques exemples de réalisation de cellules hexagonales de différentes tailles. La figure 3a correspond au cas le plus simple. Les cordons de soudure sont continus et parallèles selon une ligne L et apparaissent sous la forme de bandes sombres. L'espacement entre deux cordons de soudure voisins est égal à trois fois la largeur du cordon de soudure. Et cette largeur de cordon correspond à la largeur du segment laser. Lors de l'étirage, la deuxième feuille 101 se pliera naturellement le long des lignes extérieures des cordons de soudure pour former des cellules hexagonales.

Dans la configuration de la fig. 3a, on obtient la plus petite dimension de cellule possible, celle dont le côté est égal à la largeur du segment laser, tel que cela est représenté à la figure 3b.

Pour obtenir des cellules deux fois plus grandes, telles que représentées à la figure 3d, il suffit de programmer le parcours des têtes de soudage laser 14 de telle façon que des séries de deux cordons de soudure jointifs soient réalisées avec un espacement égal à 6 fois la largeur du cordon de soudure, c'est-à-dire 6 fois la largeur du segment laser.

Enfin, si l'on veut obtenir des cellules trois fois plus grandes que la plus petite dimension possible, il faut souder les côtés de l'hexagone qui sont communs à d'autres cellules par seulement deux cordons qui marquent les extrémités de ce côté (fig. 3e et 3f). L'espace non soudé entre ces deux cordons de soudure est suffisamment faible, et la feuille est suffisamment rigide, pour que lors de l'étirage, des cellules hexagonales se forment naturellement. Les dimensions de cellule intermédiaires entre la configuration selon la figure 3a et la configuration selon la figure 3e sont obtenues en réalisant des chevauchements partiels des cordons de soudure.

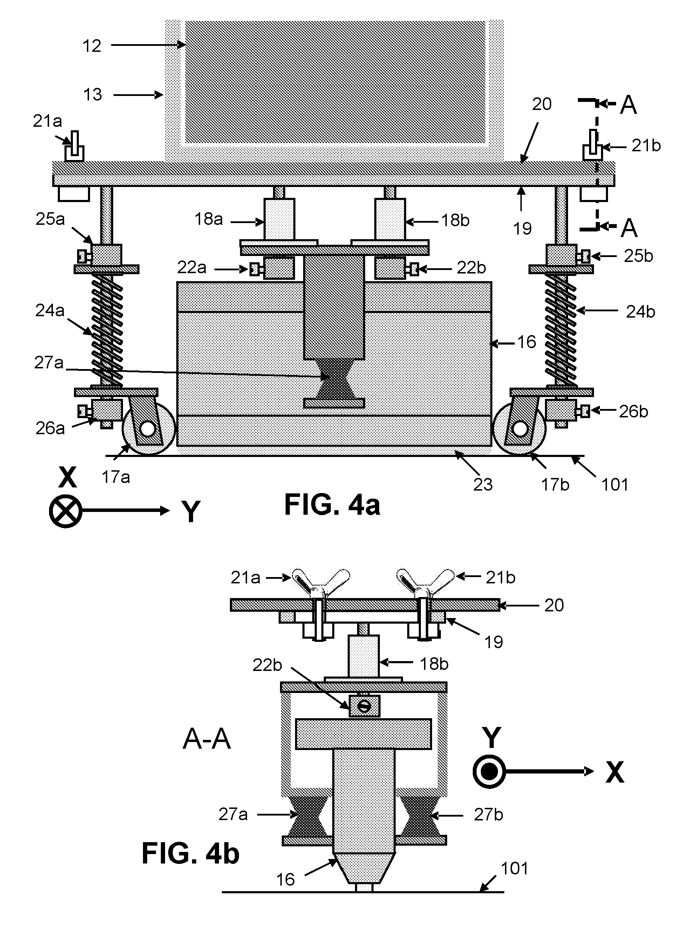

La figure 4a représente une tête de soudage laser par transparence 16 et ses deux roues presseuses 17a et 17b. Deux douilles à billes 18a et 18b lui permettent de coulisser verticalement le long de tiges métalliques encastrées dans une platine 19. Cette platine est fixée sur une plaque métallique rigide et plane 20 solidaire du chariot 13, par des vis papillons 21 a et 21 b. Les douilles 22a et 22b laissent suffisamment de course à la tête de soudage 16 pour exercer sur le format de feuille 101 une pression égale à son propre poids divisé par la surface du guide de lumière 23. Cette pression de la tête de soudage 16 lors de l'irradiation laser contribue notablement à l'interpénétration de matières fluidifiées entre les feuilles à souder. L'expérience montre que si la masse de la tête est de 5 kg elle crée à la surface de la feuille 101 au niveau d'un guide de lumière de dimension 80 x 3 mm une pression de 2 bars (0,2 MPa) qui suffit pour garantir la qualité de la soudure, sans qu'il soit nécessaire d'exercer une pression supplémentaire immédiatement après le passage du segment laser. Dans la pratique, on choisit cependant de concevoir des têtes légères, de masse inférieure à 2,5 kg, pour limiter la charge embarquée sur le chariot 13. Les roues presseuses 17a et 17b sont donc nécessaires. Leur largeur est légèrement supérieure à celle du guide de lumière 23. La roue qui est située derrière la tête laser dans le sens du défilement a donc pour utilité d'exercer une pression sur les zones ramollies en contact des feuilles à souder. La roue qui est située devant la tête de soudage 16 dans le sens du défilement remplit deux fonctions :
- d'une part, elle « pince » la deuxième feuille dite « libre » 101 sur l'empilement 110 au moment où la tête de soudage 16 quitte la zone 15a ou 15b, et évite ainsi que le guide de lumière 23 ne pousse devant lui la deuxième feuille dite « libre » 101 au lieu de monter dessus.
- d'autre part, la roue avant chasse les plis susceptibles de se former lorsque la feuille est très fine, et elle garantit au guide de lumière 23 une avancée sur une surface plane.

La pression exercée par les roues 17a et 17b est ajustable grâce à deux ressorts 24a et 24b, dont le taux de compression dépend de la position des douilles 25a et 25b. Les douilles 26a et 26b, comme les douilles 22a et 22b, limitent respectivement la descente des roues 17a et 17b et de la tête de soudage 16, de telle sorte que lorsqu'elles se trouvent dans les zones 15a et 15b elles ne soient plus en contact avec la table 7. Le chariot 13 peut alors se déplacer selon l'axe X sans frottement et sans risque d'endommager les roues et la tête de soudage 16.

La figure 4b montre que la tête de soudage 16 est reliée aux douilles à billes 18a et 18b au travers d'une suspension constituée de deux diabolos en caoutchouc 27a et 27b. Montés en vis-à-vis et en partie basse de la tête de soudage 16, ils opposent une résistance modérée à une rotation selon l'axe X mais en revanche une forte résistance à une rotation selon l'axe Y. Ainsi, cela permet le tangage de la tête de soudage 16, de manière à garantir que le guide de lumière 23 soit bien à plat sur la deuxième feuille 101, et l'on empêche le roulis.

La coupe partielle A-A permet de comprendre comment on peut choisir librement la position selon l'axe X de la platine 19 sur la plaque 20. Dans cette plaque 20, on a réalisé de part et d'autre du chariot 13 deux rangées de perçages régulièrement espacés. La platine 19 comporte une saignée parallèle à l'axe X qui permet de la fixer rapidement à la plaque 20 au moyen de quatre vis papillons 21 a, 21 b. Lors d'un changement de taille de cellule, l'ordinateur calcule l'écartement entre les guides de lumières 23 des différentes têtes de soudage 16 montées sur le chariot 13. La première tête de soudage laser est fixe, et une plaque étalon dont la largeur correspond à l'écartement souhaité est mise en appui le long du guide de lumière 23 de cette première tête laser. La deuxième tête de soudage laser est déplacée le long de l'axe X de manière à ce que son guide de lumière 23 vienne en contact de toute sa longueur avec l'autre extrémité de la plaque étalon. La deuxième tête est alors vissée en position et la même opération recommence avec le troisième tête, puis avec toutes les suivantes.

Le bloc compact constitué de la première feuille 38, de la troisième feuille 380 et de l'empilement 110 de deuxièmes feuilles 101 est coupé en tranches par un massicot d'imprimerie avec une précision inférieure à +/- 0,2 mm. Outre sa grande précision ce procédé présente l'avantage de ne générer aucune perte de matière.

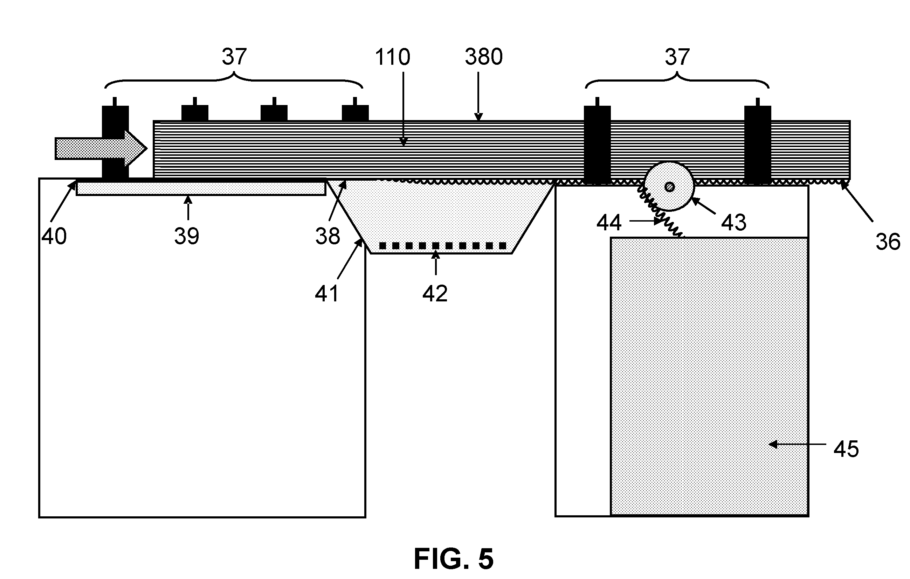

La figure 5 représente un dispositif d'expansion du matériau thermoplastique dont sont constituées la première feuille 38 et la troisième feuille 380 en vue de former des boucles 36,360. L'ensemble constitué par la première feuille 38, l'empilement 110 de deuxièmes feuilles 101 et la troisième feuille 380 est introduit en position verticale entre des bancs à rouleaux 37 eux-mêmes disposés verticalement. Cela veut dire que les feuilles thermoplastiques qui composent la tranche de la structure en nid d'abeilles sont disposées dans le plan horizontal. La première feuille 38 est tout d'abord mise en contact sous l'effet du poids de la tranche sur un plateau chauffant 39 recouvert d'un tissu en téflon anti-adhérent 40. Le but est d'élever la température au sein de la première feuille 38 à un niveau proche du seuil de décomposition de l'agent d'expansion sans pour autant déformer le bord inférieur de la tranche. La première feuille 38 préchauffée passe ensuite dans une enceinte dont la largeur est ajustée par deux volets 41 à la largeur de la tranche.

A l'intérieur de cette enceinte des résistances chauffantes 42 sont réglées de telle manière que la température de l'air à la surface de la première feuille 38 provoque la décomposition de l'agent d'expansion.

S'il s'agit d'azodicarbonamide pur, sa température de décomposition est d'environ 200°C. Cela génère des bulles de gaz qui restent emprisonnées dans le maillage constitué par les chaînes pontées entre elles. La première feuille 38 gonfle en moins d'environ trois minutes pour devenir une mousse.

Le taux d'expansion dépend de la proportion d'agent d'expansion que renferme le matériau thermoplastique dont est constituée la première feuille 38.

A titre d'exemple, on incorpore, dans le cas du polypropylène, de 7 à 11 % en masse d'azodicarbonamide lors de l'extrusion de la feuille pour obtenir ensuite un accroissement de volume entre 12 et 20 fois.

S'il s'agit d'azodicarbonamide auquel on a ajouté des activateurs de décomposition, cette température peut descendre jusqu'à 120°C.

Le temps de passage dans l'enceinte à air chaud est court, de manière à éviter le ramollissement excessif des deuxièmes feuilles 101 proches de la première feuille 38. A noter que lorsque la première feuille 38 s'expanse, son coefficient de conduction thermique diminue. En devenant une mousse, elle acquiert des propriétés d'isolation thermique. La deuxième feuille 101 qui lui est adjacente s'en trouve ainsi protégée. Le matériau thermoplastique constituant les deuxièmes feuilles 101 doit cependant pouvoir être exposé à de l'air chaud à 190°C pendant une durée d'environ trois minutes sans grand dommage. C'est le cas de tous les polymères hautes performances : polyéthersulfones (PES, PSU, PPSU), polyétherimide (PEI), polysulfure de phénylène (PPS), polyétheréthercétone (PEEK).

Si tel n'est pas le cas, on peut utiliser une première feuille 38 sous la forme d'un matériau réticulé à base de polyéthylène ou d'éthylène vinyle acétate (EVA) et contenant un agent d'expansion chimique réagissant à une température bien plus basse, jusqu'à environ 120°C. Cet agent d'expansion est par exemple de l'azodicarbonamide mélangé à du benzène-sulfohydrazide ou une alpha-amidosulfone ainsi qu'à des activateurs d'expansion.

En s'expansant la mousse réticulée forme des boucles 36 très régulières. L'expansion de la première feuille 38 a lieu dans les trois directions de l'espace, mais moins dans l'épaisseur que dans les sens long et large. Les boucles 36 sont par conséquent bien plus larges que la tranche de la structure en nid d'abeilles compact. La mousse présente des propriétés mécaniques et de tenue en température d'autant plus élevées que le taux de réticulation est important. Dans le cas de la présente invention une bande de mousse de polypropylène réticulée de 10 mm de large doit supporter un effort de 5 N sous une température de 140°C pendant au moins 10 minutes.

Deux disques coupants 43 en rotation rapide sont plaqués sur les flancs de la tranche et évacuent l'excès de matière 44 vers un conteneur 45.

L'opération est évidemment répétée sur la troisième feuille 380 de manière à former des boucles 360 et ainsi à obtenir une tranche de nid d'abeilles compact présentant sur ses deux bords une rangée de boucles de mousse réticulée 36,360.

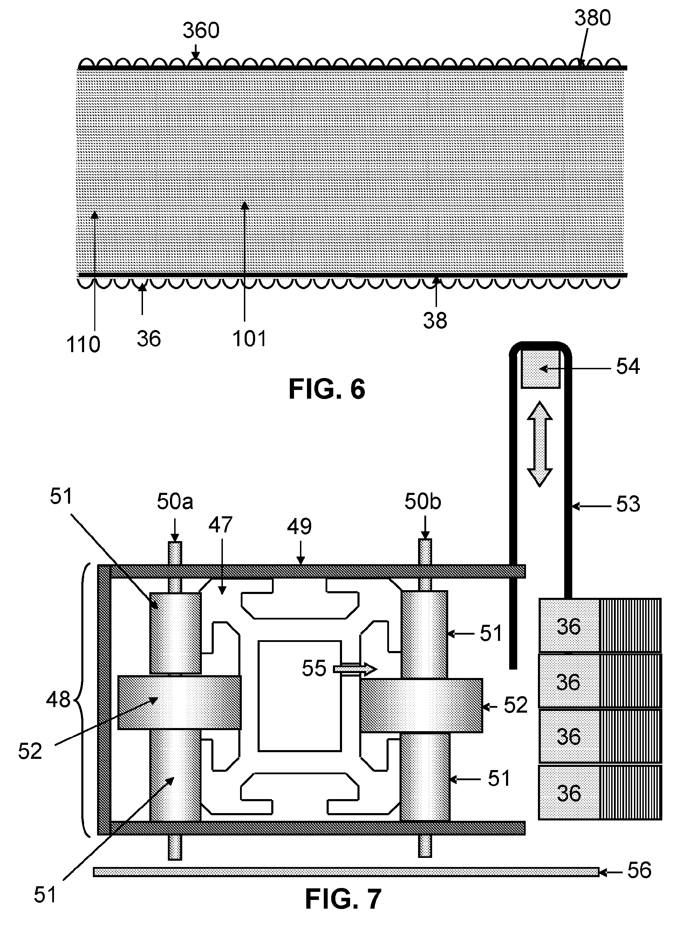

Sur la figure 6, les boucles 36,360 sont représentées.

La dernière opération du procédé de fabrication est l'étirage de la tranche dans de l'air chaud pour obtenir une structure en nid d'abeilles alvéolaire avec des cellules hexagonales.

La figure 7 est une vue en coupe d'une barre d'étirage 47 et de l'un de ses étriers 48. La barre d'étirage 47 est un profilé en aluminium. L'étrier 48 est composé d'une équerre double en acier 49 de 10 mm de large à l'intérieur de laquelle sont montés deux axes 50a et 50b qui portent des rondelles en Téflon® 51 et 52. Grâce à ces roulements en appui sur les génératrices de la barre d'étirage 47 et au très faible coefficient de frottement du Téflon®, l'étrier 48 coulisse facilement le long de la barre d'étirage 47. Une tige en U en acier 53 pénètre dans les boucles 36 et les relie ainsi à l'étrier 48. Une barre en acier de section rectangulaire 54 permet de relever simultanément les tiges 53 de tous les étriers pour pouvoir placer la tranche à étirer, ou plusieurs tranches identiques superposées. La descente de la barre 54 fait pénétrer une branche de chaque tige en U 53 dans une ou plusieurs boucles 36, et l'autre branche de ladite tige dans un trou percé dans la base de l'équerre double 49. En position basse la tige 53 est donc solidement liée par un point haut et un point bas à ladite équerre 49, et elle va pouvoir communiquer un effort de traction à la boucle 36 dans laquelle elle est insérée.

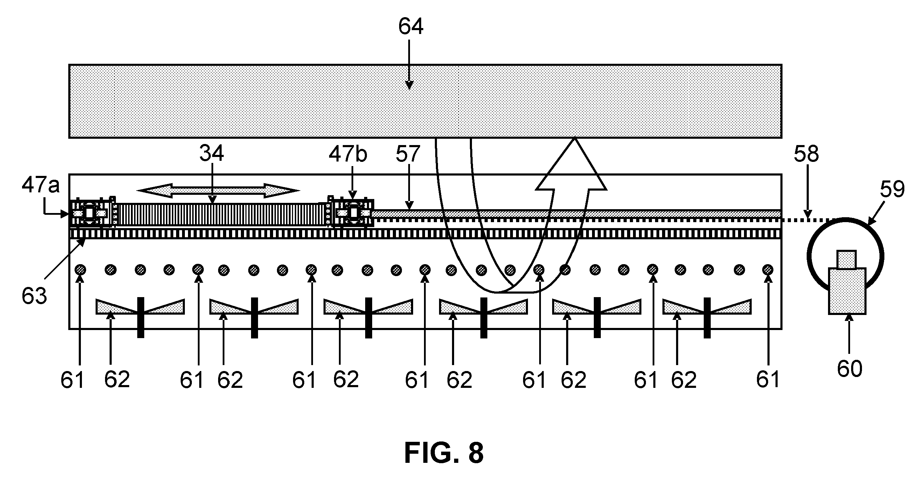

La figure 8 est une coupe longitudinale d'une table d'étirage dans une enceinte à air chaud. Deux barres d'étirage identiques 47a et 47b sont représentées. La barre d'étirage 47a est fixe. La barre d'étirage 47b se déplace dans un plan horizontal en coulissant le long de tubes en acier 57 fixés de part et d'autre de la table. A chaque extrémité de la barre d'étirage mobile 47b, au voisinage du lieu où elle coulisse sur le tube 57, est fixé un capteur de force en traction (non représenté sur la figure 8) relié à une chaîne 58. Ce capteur est un ressort à spires de raideur élevée qui établit un contact électrique lorsque son allongement dépasse une valeur limite réglable. On évite ainsi que les deux chaînes 58 enroulées sur le mandrin 59 par le moteur électrique 60 n'exercent sur la tranche de la structure en nid d'abeilles compacte une force trop élevée qui pourrait entraîner la déchirure des feuilles thermoplastiques dont elle est constituée. Pour que l'étirage de la tranche de la structure en nid d'abeilles compacte et que la formation de rangées de cellules hexagonales régulières soit possible, il convient, lors de l'étirage, de soumettre la structure en nid d'abeilles à une température légèrement supérieure à la température de déformation du matériau thermoplastique ou des matériaux thermoplastiques dont est constituée ladite structure en nid d'abeilles.

A titres d'exemples, pour la grande majorité des polymères, cette température est égale où légèrement supérieure à la Température de Fléchissement sous Charge TFC (en anglais "Heat Deflection Temperature - HDT) mesurée selon la norme ISO 75 A (méthode A : 1,8 MPa). Ainsi une tranche d'une structure en nid d'abeilles compacte :
- en polyester amorphe (APET) s'étire à 70°C,
- à 80°C avec du polystyrène (PS),
- à 150°C pour du polycarbonate (PC),
- à 160°C pour du polyétheréthercétone (PEEK), et
- à 210°C pour du polyétherimide (PEI).

Cependant, il faut au minimum 150°C pour étirer une tranche d'une structure en nid d'abeilles compacte en polypropylène homopolymère, alors que la HDT est inférieure à 100°C. Le moyen le plus fiable d'élever la température de toute la tranche de manière uniforme est de la faire traverser par un fluide chaud. Dans le cas du polyéthylène téréphtalate amorphe, du polystyrène et du polyéthylène basse densité, il est possible d'étirer la plaque dans de l'eau chaude. Mais il est plus avantageux d'utiliser de l'air chaud.

Sur la figure 8, on distingue un ensemble de fils chauffants 61. Il s'agit de fils métalliques tendus sur toute la largeur de la table d'étirage et parallèles aux barres 47a et 47b. Parcourus par un courant électrique de forte intensité, ces fils 61 dégagent de la chaleur. La température est la même en tout point du fil 61 et on la modifie en faisant varier l'intensité du courant électrique. Ainsi, on dispose d'autant de zones dont la température est réglable individuellement qu'il y a de fils chauffants 61. Un ensemble de ventilateurs 62 diffusent de l'air chaud vers la tranche de la structure en nid d'abeilles compacte. Une plaque en nid d'abeilles en acier inoxydable soudé 63, capable de supporter 250°C en continu, et dont l'épaisseur est égale à au moins 7 fois la maille des cellules hexagonales redresse le flux d'air chaud turbulent généré par les ventilateurs 62 pour en faire un écoulement laminaire. Cette plaque de nid d'abeilles en acier inoxydable porte la tranche de la structure en nid d'abeilles thermoplastique compacte au moment du montage sur les barres d'étirage.

De façon pratique, on pose la tranche ou les tranches sur la plaque de nid d'abeilles aluminium 63 et on descend les tiges en U des étriers 53 à l'intérieur des boucles 36, 360. Puis, par la force du moteur 60 on exerce à froid un effort de traction important entre les deux rangées de boucles 36, 360, de manière à provoquer une très légère ouverture des cellules (quelques microns). Les fils chauffants 61 sont alors alimentés par un courant électrique et les ventilateurs 62 mis en route. Le flux laminaire d'air chaud diffuse à l'intérieur des cellules de la tranche de la structure en nid d'abeilles et échauffent progressivement la température des feuilles thermoplastiques. Lorsque la température de déformation, mesurée par un ou plusieurs capteurs est atteinte, le moteur 60 commence à enrouler lentement les deux chaînes 58 sur le mandrin 59. La barre 47b s'éloigne peu à peu de la barre 47a. Sous l'effet des vibrations créées par le passage de l'air et par la traction, les étriers 48 se rapprochent progressivement les uns des autres. Une plaque alvéolaire se forme, et l'accroissement de sa longueur s'accompagne de la réduction de sa largeur. Une hotte amovible 64 récupère l'air chaud qui a traversé la plaque et le renvoie devant les ventilateurs 62. Si la température à l'intérieur de la tranche dépasse la température maximale que peuvent supporter les boucles 36,360 de mousse réticulée, de l'air comprimé est injecté dans le corps creux de chaque barre de traction au travers des orifices 55 visibles sur la figure 7. On refroidit ainsi les roulements en Téflon® 51,52 et les boucles 36, 360. La fine plaque d'aluminium 56 est un écran thermique solidaire de la barre d'étirage 47 qui empêche le flux laminaire d'air chaud d'atteindre directement les étriers 48 et les boucles 36,360 de mousse.

Lorsque la barre 47b a atteint sa position finale, l'alimentation électrique des fils chauffants 61 est coupée alors que les ventilateurs 62 continuent de tourner.

Si le matériau thermoplastique qui constitue les feuilles de la structure en nid d'abeilles est semi-cristallin, il est nécessaire de refroidir progressivement la structure en nid d'abeilles pour éviter un phénomène de retrait. Une fois refroidie, la structure est transférée sur une table d'un massicot d'imprimerie pour éliminer la première et la dernière rangée de cellules, ainsi que les boucles 36,360 qui leur sont attachées.

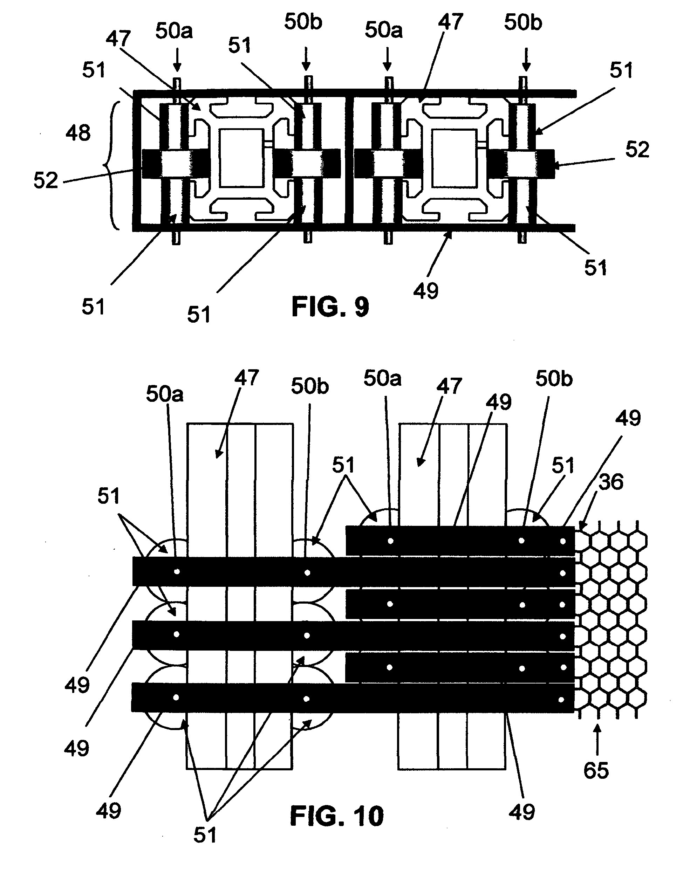

Les figures 9 et 10 représentent un dispositif avantageux pour augmenter le nombre de boucles 36, qui participent à l'opération d'étirage. En effet, lorsque la maille de la cellule hexagonale est petite, les lignes de soudure sont rapprochées et le nombre de boucles 36 est par conséquent très élevé. On peut décider de ne tirer que sur une boucle 36 sur quatre par exemple. Les rangées de cellules les plus proches des barres 47a et 47b seront déformées et il faudra donc éliminer une plus grande quantité de matière. Pour accroître le nombre d'étriers 48 disponibles, on peut utiliser une barre d'étirage 47 double (figure 9), dont les équerres 49 des étriers 48 de l'une des barres d'étirage 47 ont des branches plus longues que celle de la deuxième barre d'étirage. La figure 10 est une vue de dessus qui montre comment les étriers 48 s'intercalent. Dans cet exemple, on saisit toutes les boucles 36, ce qui permet d'obtenir des rangées de cellules régulières 65 au voisinage de ces boucles 36.

Il est important de noter que l'on peut étirer le réseau alvéolaire de manière à obtenir des cellules hexagonales non pas régulières mais allongées dans une direction. Une plaque alvéolaire avec des cellules "surexpansées" (en anglais "overexpanded") possède une plus grande souplesse dans une direction, ce qui lui permet par exemple d'épouser une surface courbe.

La principale application industrielle des structures en nid d'abeilles obtenues par le procédé de fabrication selon l'invention est le panneau sandwich dont elles constituent l'âme. Les peaux (ou surfaces) du sandwich sont décoratives (stratifié, bois) dans le cas de la réalisation de mobilier et de cloisons, notamment pour les intérieurs de bateaux de plaisance. Elles sont structurelles (composite, tôle, acier) dans le cas de pièces pour l'aéronautique, l'automobile et le ferroviaire. Elles sont à la fois structurelles et décoratives (aluminium laqué, composite revêtu d'un gelcoat), lorsqu'il s'agit de réaliser des parois de remorques de camion, de camping car, de nacelle d'éolienne par exemples.

Par ailleurs, la structure en nid d'abeilles peut aussi servir de noyau creux à une structure composite. Dans ce cas, elle est revêtue d'un film d'étanchéité et d'un non tissé d'accrochage de la résine qui va être appliquée par contact ou infusion, résine elle-même renforcée par une ou plusieurs couches de mat de verre déposé à la surface de la structure en nid d'abeilles.

## Revendications

1. Procédé de fabrication d'une structure alvéolaire en nid d'abeilles comprenant les étapes suivantes :
- on dispose d'une première feuille (38) d'un matériau thermoplastique contenant au moins un agent d'expansion ;
- on rapporte et on soude au laser, selon une pluralité de cordons de soudure continus espacés les uns des autres, une deuxième feuille (101) d'un matériau thermoplastique absorbant sur la première feuille (38), le cas échéant on rapporte et on soude au laser, selon une pluralité de cordons de soudure continus espacés les uns des autres, au moins une deuxième feuille (101) sur la deuxième feuille (101) qui la précède de manière à former un empilement (110) de deuxièmes feuilles (101);
- on rapporte et on soude au laser, selon une pluralité de cordons de soudure continus espacés les uns des autres, sur la deuxième feuille (101), le cas échéant sur l'empilement (110) de deuxièmes feuilles (101), une troisième feuille (380) d'un matériau thermoplastique contenant au moins un agent d'expansion ;
- on forme des premières boucles (36) entre les cordons de soudure de la première feuille (38) avec la deuxième feuille (101), le cas échéant avec l'empilement (110) de deuxièmes feuilles (101), par expansion du matériau thermoplastique de la première feuille (38) ;
- on forme des deuxièmes boucles (360) entre les cordons de soudure de la troisième feuille (380) avec la deuxième feuille (101), le cas échéant avec l'empilement de deuxièmes feuilles (101), par expansion du matériau thermoplastique de la troisième feuille (380) ;
- on dispose dans les premières boucles (36) et deuxièmes boucles (360) un dispositif d'étirage ;
- on étire l'ensemble constitué par la première feuille (38), la deuxième feuille (101), le cas échéant l'empilement (110) de deuxièmes feuilles (101), et la troisième feuille (380) au moyen du dispositif d'étirage.

2. Procédé de fabrication selon la revendication 1, **caractérisé en ce que** l'agent d'expansion est l'azodicarbonamide.

3. Procédé de fabrication selon l'une quelconque des revendications précédentes, **caractérisé en ce que** le matériau thermoplastique de la première feuille (38) et de la troisième feuille (380) comprend au moins un polymère choisi dans le groupe constitué par le polypropylène, le polyéthylène et l'éthylène vinyle acétate.

4. Procédé de fabrication selon l'une quelconque des revendications précédentes, **caractérisé en ce que** le matériau thermoplastique de la deuxième feuille (101) comprend au moins un polymère choisi dans le groupe constitué par le polypropylène, le polyéthylène, les polyamides, les polyesters, les polystyrènes, le polycarbonate, l'acrylonitrile butadiène styrène, le polyétherimide, les polyéthersulfones, le polysulfure de phénylène et le polyéther éther cétone et qu'il contient en outre du noir de carbone.

5. Procédé de fabrication selon l'une quelconque des revendications précédentes, **caractérisé en ce qu'**on soude au laser au moyen d'un dispositif de soudage qui comprend une pluralité de têtes laser (14) générant chacune un faisceau laser de forme rectangulaire qui est uniforme ou à profil énergétique en forme de "M".

6. Procédé de fabrication selon l'une quelconque des revendications précédentes, **caractérisé en ce qu'**on forme des premières boucles (36) et des deuxièmes boucles (360) en chauffant respectivement la première feuille (101) et la troisième feuille (380) à la température de décomposition de l'agent d'expansion.

7. Procédé de fabrication selon l'une quelconque des revendications précédentes, **caractérisé en ce que** le dispositif d'étirage comprend une pluralité d'étriers (48) et une pluralité de tiges en U (53), lesdites tiges en U (53) étant agencées de manière à pénétrer dans les premières boucles (36) et les deuxièmes boucles (360) et à les relier aux étriers 48.

8. Procédé de fabrication selon l'une quelconque des revendications précédentes, **caractérisé en ce que** le dispositif d'étirage comprend un moyen de diffusion d'air chaud.

9. Procédé de fabrication selon l'une quelconque des revendications précédentes, **caractérisé en ce qu'**on soude au laser et on étire l'ensemble constitué par la première feuille (38), la deuxième feuille (101), le cas échéant l'empilement (110) de deuxièmes feuilles (101), et la troisième feuille (380), de manière à obtenir une structure alvéolaire en nid d'abeilles de densité inférieure à 50 kg/m³, de préférence inférieure à 30 kg/m³, avec des alvéoles hexagonales de maille comprise entre 3 et 50 mm.

10. Procédé de fabrication selon l'une quelconque des revendications précédentes, **caractérisé en ce qu'**on découpe la structure alvéolaire en nid d'abeilles en des tranches dont l'épaisseur est d'au moins 1 mm, de préférence entre 1 et 5 mm, et dont la tolérance d'épaisseur est inférieure à +/- 0,2 mm.

11. Installation pour la mise en oeuvre du procédé de fabrication d'une structure alvéolaire en nid d'abeilles selon l'une quelconque des revendications 1 à 10, ladite installation comprenant :
- des moyens de découpe des premières feuilles (38), deuxièmes feuilles (101) et troisièmes feuilles (380);
- un dispositif d'empilement des premières feuilles (38), deuxièmes feuilles (101) et troisièmes feuilles (380);
- un dispositif de soudage au laser, optionnellement équipé de moyens de pression ;
- un dispositif d'expansion de l'agent d'expansion du matériau thermoplastique de la première feuille (38) et de la troisième feuille (380) ;
- un dispositif d'étirage, optionnellement équipé d'un moyen de diffusion d'air chaud.

12. Installation selon la revendication 11, **caractérisée en ce que** le dispositif d'étirage comprend une pluralité d'étriers (48), une pluralité de tiges en U (53), lesdites tiges en U (53) étant agencées de manière à pénétrer dans les premières boucles (36) et les deuxièmes boucles (360) et à les relier aux étriers (48).

13. Installation selon l'une quelconque des revendications 11 à 12, **caractérisée en ce que** le dispositif d'expansion comprend un four à air chaud (41,42).

14. Installation selon l'une quelconque des revendications 11 à 13, **caractérisée en ce que** le dispositif de soudage comprend une pluralité de têtes laser (14) générant chacune un faisceau laser de forme rectangulaire qui est uniforme ou à profil énergétique en "M".

## Patentansprüche

1. Verfahren zur Herstellung einer zellenartigen Wabenstruktur, welches die folgenden Schritte umfasst:
- eine erste Folie (38) aus einem thermoplastischen Material, welches wenigstens ein Treibmittel enthält, wird flach gelegt;
- eine zweite Folie (101) aus einem absorbierenden thermoplastischen Material wird auf die erste Folie (38) gelegt und darauf mit einer Mehrzahl von Schweißnähten laserverschweißt, gegebenenfalls mindestens eine weitere zweite Folie (101) wird gelegt und mit einer Vielzahl von regelmäßig beabstandeten Schweißnähten auf zweite Folie (101) laserverschweißt, um einen Stapel (110) von zweiten Folien (101) zu bilden;
- eine dritte Folie (380) aus einem thermoplastischen Material, welches wenigstens ein Treibmittel enthält, wird auf die zweite Folie (101) gelegt, gegebenenfalls auf den Stapel (110) von zweiten Folien (101), und darauf mit einer Vielzahl von regelmäßig beabstandeten Schweißnähten laserverschweißt;
- erste Schleifen (36) sind zwischen den Schweißnähten der ersten Folie (38) mit der zweiten Folien (101) gebildet, gegebenenfalls mit dem Stapel von zweiten Folien (110), durch die Ausdehnung des thermoplastischen Materials der ersten Folie (38);
- zweite Schleifen (360) sind zwischen den Schweißnähten der dritten Folie (380) mit zweiter Folie (101) gebildet, gegebenenfalls mit dem Stapel von zweiten Folien (101), durch die Ausdehnung des thermoplastischen Materials der dritten Folie (380);
- Eine Streckeinrichtung wird in die ersten Schleifen (36) und in die zweiten Schlaufen (360) eingefügt;
- Die Anordnung bestehend aus erster Folie (38), zweiter Folie (101), gegebenenfalls aus dem Stapel (110) von zweiten Folien (101), und dritter Folie (380) wird mittels der Streckeinrichtung vertreckt.

2. Verfahren zur Herstellung nach Anspruch 1, **dadurch gekennzeichnet, dass** das Treibmittel Azodicarbonamid ist.

3. Verfahren zur Herstellung nach einem der vorhergehenden Ansprüche, **dadurch gekennzeichnet, dass** das thermoplastische Material der ersten Folle (38) und der dritten Folie(380) mindestens ein Polymer aus der Gruppe gebildet von Polypropylen, Polyethylen und Ethylen-Vinylacetat enthält.

4. Verfahren zur Herstellung nach einem der vorhergehenden Ansprüche, **dadurch gekennzeichnet, dass** das thermoplastische Material der zweiten Folie (101) mindestens ein Polymer aus der Gruppe gebildet von Polypropylen, Polyethylen, Polyamiden, Polyestern, Polycarbonat, Acrylnitril-Butadien-Styrol, Polyetherimid, Polyethersulfone, Polyphenylensulfid und Polyetheretherketon enthält, und dass es auch Ruß enthält.

5. Verfahren zur Herstellung nach einem der vorhergehenden Ansprüche, **dadurch gekennzeichnet, dass** das Laserschweissen mit einer Schweißvorrichtung gemacht wird, welche eine Mehrzahl von Laserköpfen (14) umfasst, von denen jeder einen rechteckförmigen Laserstrahl erzeugt, entweder gleichförmig oder mit einem Energieprofil in die Form eines "M".

6. Verfahren zur Herstellung nach einem der vorhergehenden Ansprüche, **dadurch gekennzeichnet, dass** erste Schleifen (36) und zweite Schleifen (360) durch die Heizung von erster Folie (101) und dritter Folie (380) bei der Zersetzungstemperatur des Treibmittels gebildet werden.

7. Verfahren zur Herstellung nach einem der vorhergehenden Ansprüche, **dadurch gekennzeichnet, dass** die Streckeinrichtung eine Vielzahl von Befestigungswinkeln (48) und eine Mehrzahl von U-förmigen Bügeln (53) aufweist, wobei die U-förmigen Bügeln (53) derart angeordnet sind, um in die ersten Schleifen (36) und in die zweiten Schleifen (360) eingefügt zu werden und um diese mit den Bcfcstigungswinkeln (48) zu verbinden.

8. Verfahren zur Herstellung nach einem der vorhergehenden Ansprüche, **dadurch gekennzeichnet, dass** die Streckeinrichtung eine Zwangsluftheizung umfaßt.

9. Verfahren zur Herstellung nach einem der vorhergehenden Ansprüche, **dadurch gekennzeichnet, dass** die Anordnung bestehend aus erster Folie (38), zweiter Folie (101), gegebenenfalls aus dem Stapel (110) von zweiten Folien (101), und dritter Folie (380) verstreckt wird, um eine zellartige Wabenstruktur mit einer Dichte geringer als 50 kg / m³, vorzugsweise geringer als 30 kg / m³, mit sechseckigen Zellen mit einer Größe zwischen 3 und 50 mm zu erhalten.

10. Verfahren zur Herstellung nach einem der vorhergehenden Ansprüche, **dadurch gekennzeichnet, dass** die zellenartige Wabenstruktur in Scheiben geschnitten wird, deren Dicke mindestens 1 mm vorzugsweise 1 bis 5 mm beträgt, mit einer Dickentoleranz kleiner als ± 0,2 mm.

11. Anlage zur Durchführung des Verfahrens zur Herstellung einer zellartigen Wabenstruktur nach einem der Ansprüche 1-10, wobei die Anlage umfasst:
- Mittel zum Schneiden erster Folien (38), zweiter Folien (101) und dritter Folien (380);
- eine Vorrichtung zum Stapeln erster Folien (38), zweiter Folien (101) und dritter Folien (380);
- eine Vorrichtung zum Laserschweißen, die gegebenenfalls mit Druckmittel ausgestattet ist;
- eine Vorrichtung um das Treibmittel, welches in dem thermoplastischen Material der ersten Folien (38) und der dritten Folien (380) enthalten ist, zu zersetzen;
- Eine Streckeinrichtung, wahlweise mit einem Umluftheizung ausgestattet.

12. Anlage nach Anspruch 11, **dadurch gekennzeichnet, dass** die Streckeinrichtung eine Vielzahl von Befestigungswinkoln (48) und eine Mehrzahl von U-förmigen Bügeln (53) aufweist, wobei die U-förmigen Bügeln (53) derart angeordnet sind, um in die ersten Schleifen (36) und in die zweiten Schleifen (360) eingefügt zu werden und um diese mit den Befestigungswinkeln (48) zu verbinden.

13. Anlage nach einem der Ansprüche 11-12, **dadurch gekennzeichnet, dass** die Expansionsmaschine einen Heißluftofen (41,42) umfaßt.

14. Anlage nach einem der Ansprüche 11-13, **dadurch gekennzeichnet, dass** die Schweißeinrichtung eine Mehrzahl von Laserköpfen (14) umfasst, von denen jeder einen rechteckförmigen Laserstrahl erzeugt, entweder gleichförmig oder mit einem Energieprofil in die Form eines "M".

## Claims

1. A method of manufacturing a cell-like honeycomb structure comprising the following steps :
- a first sheet (38) of a thermoplastic material containing at least one blowing agent is laid fiat;
- a second sheet (101) of an absorbing thermoplastic material is laid on the first sheet (38) and is laser welded on it with a plurality of weld seams, when appropriate at least another second sheet (101) is laid and laser welded with a plurality of regularly spaced weld seams onto the second sheet (101) so as to form a stack (110) of second sheets (101);
- a third sheet (380) of a thermoplastic material containing at least one blowing agent is laid onto the second sheet (101), when appropriate onto the stack (110) of second sheets (101), and is laser welded onto it with a plurality of regularly spaced continuous weld seams ;
- first loops (36) are formed between the weld seams of the first sheet (38) with the second sheet (101), when appropriate with the stack of second sheets (110), by the expansion of the thermoplastic material of first sheet (38);
- second loops (360) are formed between the weld seams of the third sheet (380) with the second sheet (101), when appropriate with the stack of second sheets (101), by the expansion of the thermoplastic material of third sheet (380);
- a stretching device Is inserted into the first loops (36) and the second loops (360) ;
- the assembly consisting of first layer (38), second layer (101), when appropriate the stack (110) of second sheets (101), and third layer (380) is stretched by means of the stretching device.

2. A method of manufacturing according to claim 1, **characterized in that** the blowing agent is azobicarbonamide.

3. A method of manufacturing according to any of the preceding claims, **characterized in that** the thermoplastic material of first sheet (38) and of third sheet (380) comprises at least one polymer chosen in the group formed by polypropylene, polyethylene and ethylene vinyl acetate.

4. A method of manufacturing according to any of the preceding claims, **characterized in that** the thermoplastic material of second sheet (101) comprises at least one polymer chosen in the group formed by polypropylene, polyethylene, the polyamides, the polyesters, polycarbonate, acrylonitrile butadiene styrene, polyetherimide, the polyethcrsulfones, polyphenylene sulphide and polyetheretherketone and that it also contains carbon black.

5. A method of manufacturing according to any of the preceding claims, **characterized in that** laser welding is made with a welding device comprising a plurality of laser heads (14) each generating a rectangular-shaped laser beam that is either uniform or with an energy profile in the form of a "M".

6. A method of manufacturing according to any of the preceding claims, **characterized in that** the first loops (36) and the second loops (360) are formed by respectively heating first sheet (101) and third sheet (380) at the decomposition temperature of the blowing agent.

7. A method of manufacturing according to any of the preceding claims, **characterized in that** the stretching device comprises a plurality of callipers (48) and a plurality of U-shaped rods (53), said U-shaped rods (53) being arranged in such a way to penetrate in the first loops (36) and in the second loops (360) and to connect them to the callipers (48).

8. A method of manufacturing according to any of the preceding claims, **characterized in that** the stretching device comprises a forced-air heating system.

9. A method of manufacturing according to any of the preceding claims, **characterized by** laser welding and in that the assembly consisting of first layer (38), second layer (101), when appropriate the stack (110) of second sheets (101), and third layer (380) is stretched so as to obtain a cell-like honeycomb structure with a density inferior to 50 kg/m³, preferably inferior to 30 kg/m³, with hexagonal cells having a size between 3 and 50 mm.

10. A method of manufacturing according to any of the preceding claims, **characterized in that** the cell-like honeycomb structure is cut in slices, the thickness of which is at least 1 mm, preferably between 1 and 5 mm, with a thickness tolerance inferior to ± 0.2 mm.

11. Installation for implementing the method of manufacturing of a cell-like honeycomb structure according to any of claims 1-10, said installation comprising :
- means for cutting first sheets (38), second sheets (101) and third sheets (380) ;
- a device for stacking first sheets (38), second sheets (101) and third sheets (380) ;
- a device for laser welding, optionally equipped with means for exerting pressure;
- a device for decomposing the blowing agent contained in the thermoplastic material of first sheet (38) and third sheet (380) ;
- a stretching device, optionally equipped with a forced-air heating system.

12. Installation according to claim 11, **characterized in that** the stretching device comprises a plurality of callipers (48) and a plurality of U-shaped rods (53), said U-shaped rods (53) being arranged in such a way to penetrate in the first loops (36) and in the second loops (360) and to connect them to the callipers (48).

13. Installation according to any of claims 11-12, **characterized in that** the expansion device comprises a hot air oven (41,42).

14. Installation according to any of claims 11-13, **characterized in that** the welding device comprises a plurality of laser heads (14) each generating a rectangular-shaped laser beam that is either uniform or with an energy profile in the form of a "M".
